# EUROPEAN PATENT SPECIFICATION

(11) **EP 3 256 611 B1**
(45) Date of publication and mention of the grant of the patent: **03.04.2019**
(21) Application number: 16713072.3
(22) Date of filing: 12.02.2016
(51) Int. Cl.: C22B 7/00, C22B 3/00

(54) **ASSEMBLY TO PERFORM A HYDROMETALLURGICAL RECOVERY OF MATERIALS FROM ELECTRONIC BOARDS**
ANORDNUNG ZUR HYDROMETALLURGISCHEN RÜCKGEWINNUNG VON MATERIALIEN AUS ELEKTRONISCHEN PLATTEN
ENSEMBLE POUR EFFECTUER UNE RÉCUPÉRATION HYDROMÉTALLURGIQUE DE MATÉRIAUX DE CARTES ÉLECTRONIQUES

(30) Priority: 12.02.2015 IT RM20150064
(43) Date of publication of application: 20.12.2017
(73) Proprietor: Agenzia Nazionale Per Le Nuove Tecnologie, L'Energia E Lo Sviluppo Economico Sostenibile (ENEA), 00198 Roma (IT)
(72) Inventor: FONTANA, Danilo, 00198 Roma (IT); PIETRANTONIO, Massimiliana, 00198 Roma (IT); PUCCIARMATI, Stefano, 00198 Roma (IT); TORELLI, Giorgia Nadia, 00198 Roma (IT); DE CAROLIS, Roberta, 00198 Roma (IT); BRUNORI, Claudia, 00198 Roma (IT)
(74) Representative: Bosman, Cesare
(86) International application number: PCT/IB2016/050763
(87) International publication number: WO 2016/128942

(56) References cited:
- US-A- 4 426 225
- HAIYU YANG ET AL: "Leaching copper from shredded particles of waste printed circuit boards", JOURNAL OF HAZARDOUS MATERIALS, ELSEVIER, AMSTERDAM, NL, vol. 187, no. 1, 11 January 2011 (2011-01-11), pages 393-400, XP028153114, ISSN: 0304-3894, DOI: 10.1016/J.JHAZMAT.2011.01.051 [retrieved on 2011-01-18]
- YANHUA ZHANG ET AL: "Current Status on Leaching Precious Metals from Waste Printed Circuit Boards", PROCEDIA ENVIRONMENTAL SCIENCES, vol. 16, 1 January 2012 (2012-01-01), pages 560-568, XP055121350, ISSN: 1878-0296, DOI: 10.1016/j.proenv.2012.10.077
- ANDREA MECUCCI AND KEITH SCOTT: "Leaching and electrochemical recovery of copper, lead and tin from scrap printed circuit boards", JOURNAL OF CHEMICAL TECHNOLOGY AND BIOTECHNOLOGY, JOHN WILEY & SONS LTD, UNITED KINGDOM, vol. 77, no. 4, 1 April 2002 (2002-04-01), pages 449-457, XP001577446, ISSN: 0268-2575, DOI: 10.1002/JCTB.575 [retrieved on 2002-02-08]

## Description

### TECHNICAL FIELD

The present invention concerns an assembly to perform a hydrometallurgical recovery of materials from electronic boards.

### BACKGROUND ART

The recovery of materials from waste electrical and electronic equipment (WEEE) represents a great opportunity in terms of both the high value of some of these materials and their reuse in components and products typical of the advanced economies (electric cars, flat screen TVs, mobile phones, magnets, batteries, fuel cells, catalytic converters, some types of solar cells).

The demand for these materials in recent years has drastically increased and has led to a criticality in availability of the supply, resulting in higher prices.

For a correct evaluation of the above, it should be added that waste electrical and electronic equipment has an annual growth rate of 3-5%, and according to the European Waste Catalogue (EWC), WEEE should be considered hazardous for the environment as it contains heavy metals and halogenated organic compounds.

The study of technologies for the recovery of raw materials from disused electronic devices is therefore of great interest, both in terms of suggesting an alternative to disposal in landfills or incinerators, preventing consequent pollution, and developing a selective process for the recovery of metals having a high commercial value, also in relation to the possibility of exploiting them as alternative resources.

Electronic boards constitute on average 10% by weight of a PC, comprising mother board, RAM and CPU. Each board can contain up to 60 elements of the periodic table including a large proportion of noble and strategic metals such as Pt, Ag, Au, and metals with a high commercial value like Cu and Sn.

The recovery of metals and materials from electronic boards generally entails mechanical pre-treatment of the boards (grinding) using physical, gravimetric and/or electromagnetic methods, pyrometallurgical, hydrometallurgical and biometallurgical processes.

Pyrometallurgical processes at high temperature (around 1200°C) require big investments and have considerable environmental problems due to emissions into the atmosphere. Hydrometallurgical techniques, on the other hand, are generally carried out at temperatures similar to ambient temperature, with lower costs and limited emissions into the atmosphere.

Furthermore, the need for mechanical pre-treatment of the boards represents a complication in terms of both preparation of the sample and the subsequent hydrometallurgical process, to the extent that it is often necessary to design machinery able to crush the waste into appropriate dimensions.

Generally, gold is separated by a sequence of steps necessary to reach a high level of purity. Obtaining of gold and noble metals in general is the subject of various studies in the sector, and a part of the patent literature describes extraction procedures conducted with the aid of a complexing molecule synthesised for the purpose.

The Applicant has devised a hydrometallurgical process for the recovery of materials from electronic boards as described and claimed in the patent application RM2013A000549. This process has the main advantages of not entailing any grinding pre-treatment and can therefore be applied to whole electronic boards, and of guaranteeing simple direct recovery of the metal gold and the stannic oxide and/or metastannic acid after a first leaching step.

HAIYU YANG ET AL: "Leaching copper from shredded particles of waste printed circuit boards",JOURNAL OF HAZARDOUS MATERIALS, ELSEVIER, AMSTERDAM, NL, vol. 187, no. 1, 11 January 2011 (2011-01-11), pages 393-400, XP028153114 discloses a process for treating waste printed circuit boards (PCB) containing a pre-treatment step comprising immersing the wasted PCB in diluted nitric acid.

### DISCLOSURE OF INVENTION

The subject of the present invention is an assembly to perform a hydrometallurgical process for the recovery of materials from electronic boards, the essential characteristics of which are described in claim 1, and the preferred and/or auxiliary characteristics of which are described in claims 2-9.

### BRIEF DESCRIPTION OF THE DRAWINGS

An embodiment example is given below purely for illustrative non-limiting purposes with the aid of the accompanying figures in which:
- figure 1 schematically illustrates the assembly subject of the present invention;
- figure 2 illustrates in exploded form an embodiment of a component of the assembly subject of the present invention.

### BEST MODE FOR CARRYING OUT THE INVENTION

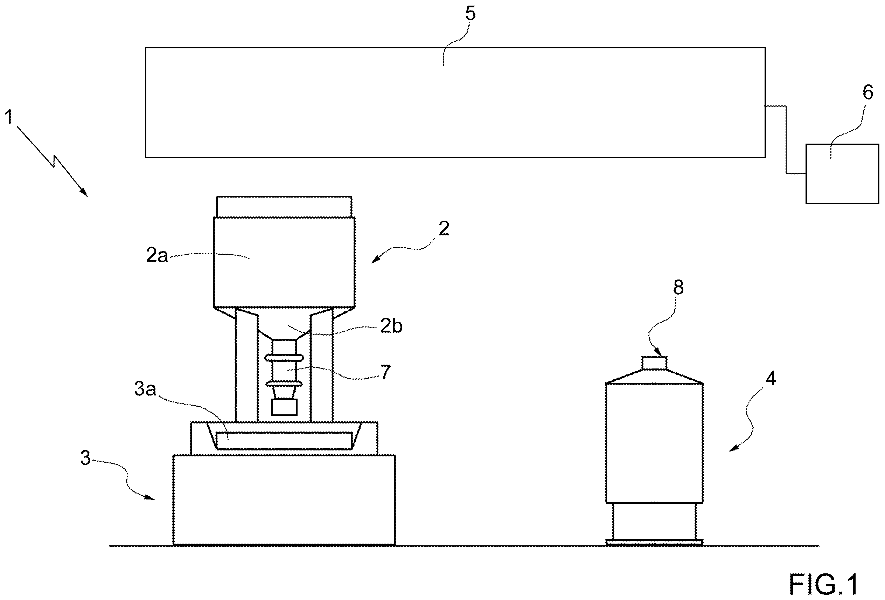

In figure 1 the assembly to perform a hydrometallurgical process for recovery of materials from electronic boards is indicated as a whole by the number 1.

The assembly 1 comprises a dissolver 2, an oscillator 3 provided with oscillating board 3a on which the dissolver 2, a vibrating screen 4, moving means 5 illustrated extremely schematically and a control unit 6 also illustrated extremely schematically are fixed in a reversible manner.

The dissolver 2 consists of an upper portion 2a with the shape of a parallelepiped designed to house the electronic boards to be processed, and a bottom portion 2b with the shape of a truncated cone and comprising a faucet 7 which can be preferably remotely operated.

The vibrating screen 4 is a machine known to a person skilled in the art and therefore is not described in detail. The vibrating screen 4 must necessarily comprise at least one first screen with holes having dimensions ranging from 10 to 3 mm for recovery of unwelded components of different nature, and a second screen with holes having dimensions ranging from 0.5 to 0.01 mm for the recovery of metal Au. Preferably, the vibrating screen comprises 4 screens with holes having decreasing dimensions (10 mm; 5 mm; 0.4 mm; 0.03 mm), which retain solids with progressively smaller dimensions.

The moving means 5 are designed to move the dissolver 2 from the oscillating board 3a to the vibrating screen 4 and vice versa. The shape and components of the moving means 5 are not relevant for the purposes of the present invention as long as they are able to provide the movement described above.

The control unit 6 is designed to control at least the moving means 5 and/or opening and closing of the faucet 7 and/or activation or deactivation of the oscillating board 3a.

The vibrating screen 4 comprises an upper wall having a central opening 8 designed to receive the faucet 7 of the dissolver 2.

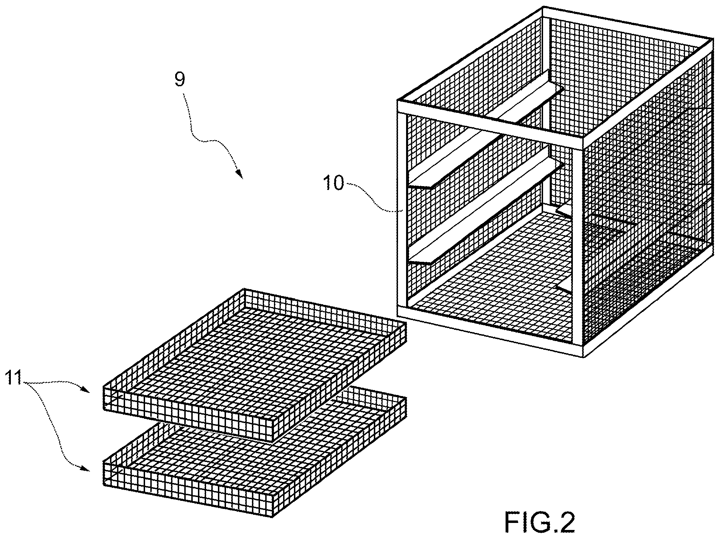

Figure 2 shows overall by the number 9 the board holder basket which will be housed in a removable manner inside the upper portion 2a of the dissolver 2.

The board housing basket 9 consists of a supporting structure 10 and two racks 11 designed to be housed one on top of the other and in a removable manner in the supporting structure 10. The racks 10 are made of a grid structure with meshes having dimensions ranging from 1 to 10 cm.

The board housing basket 9, the dissolver 2 and the vibrating screen 4 are made of AISI 316 steel.

In use, once the racks 11 have been loaded with the electronic boards to be processed and inserted in the structure 10, the board housing basket 9 as a whole is housed inside the dissolver 2 together with a leaching solution, e.g. of HNO₃ at 30% w/w maintaining a solid/liquid ratio of 1:3. The dissolver thus loaded is arranged on the oscillating board 3a, which is activated to favour the leaching step.

Once the time necessary for carrying out the leaching step has elapsed, the dissolver 2 is moved from the oscillator 3 to the vibrating screen 4, where the faucet 7 is arranged to engage the opening 8. Once this arrangement has been obtained, the faucet 7 is opened and the leaching solution is discharged into the vibrating screen 8.

As anticipated above, the movement operations can be performed by the moving means 5 which, together with the oscillator 3 and the faucet 7, are controlled by the control unit 6.

The steps relative to the leaching and vibration screening are described in the patent application RM2013A000549.

The elements of the assembly subject of the present invention can be arranged differently from the above description. Furthermore, the various elements of the assembly can be wholly or partly moved or operated manually.

From the above description it is evident that the assembly of the present invention allows simple effective metallurgical recovery of materials from electronic boards.

## Claims

1. An assembly (1) to perform a hydrometallurgical recovery of materials from electronic boards; said assembly being **characterized by** comprising at least:
a) a basket (9) to house electronic boards, which comprises a mesh structure with meshes having dimensions ranging from 1 to 10 cm;
b) a dissolver (2), which is designed to house, on the inside and in a removable manner, said basket (9) and to be filled with a leaching solution comprising at least HNO₃ at a concentration greater than or equal to 20% w/w; said dissolver (2) comprising a bottom portion (2b) having a draining device (7) to empty it;
c) stirring means (3), which are designed to stir the leaching solution on the inside of said dissolver (2);
d) a vibrating screen (4), which is designed to be connected to said draining means (7) of the dissolver (2) so as to receive their leaching solution; said vibrating screen (4) comprising at least one first screen having holes with dimensions ranging from 10 to 3 mm for the recovery of unwelded components of different nature, and a second screen having holes with dimensions ranging from 0.5 to 0.01 mm for the recovery of metal Au.

2. An assembly according to claim 1, **characterized in that** said stirring means (3) comprise an oscillating board (3a) connected to said dissolver (2).

3. An assembly according to claim 1 or 2, **characterized in that** the dissolver (2) consists of an upper portion (2a) with the shape of a parallelepiped, which is designed to house the electronic boards to be processed, and a bottom portion (2b) with the shape of a truncated cone, which has, at the centre, a faucet (7) acting as a draining device.

4. An assembly according to any of the previous claims, **characterized in that** the vibrating screen (4) comprises an upper wall having an opening (8), which is suited to receive said draining device (7) of the dissolver (2).

5. An assembly according to one of the previous claims, **characterized in that** said basket (9) consists of a plurality of housing racks (11) with a rectangular shape, which are mounted in a removable manner one on top of the other on a single structure (10).

6. An assembly according to any of the previous claims, **characterized in that** said draining device (7) can be remotely operated.

7. An assembly according to one of the previous claims, **characterized by** comprising moving means (5), which are designed to move said dissolver (2) from a first position, in which it is connected to said stirring means (3), to a second position, in which it is connected to said vibrating screen (4), and vice versa.

8. An assembly according to claim 7, **characterized by** comprising a control unit (6), which is designed to control said moving means (5) and/or said draining device (7) and/or said stirring means (3).

9. An assembly according to any of the previous claims, **characterized in that** said basket (9) housing electronic boards, said dissolver (2) and said vibrating screen (4) are made of a material chosen among steel, aluminium or plastic materials resistant to strong acids.

## Patentansprüche

1. Anordnung (1) zum Durchführen einer hydrometallurgischen Rückgewinnung von Materialien aus elektronischen Leiterplatten, **dadurch gekennzeichnet, dass** die Anordnung mindestens umfasst:
a) einen Korb (9) zur Aufnahme von elektronischen Leiterplatten, der eine Gitterstruktur mit Gittern in Abmessungen im Bereich von 1 bis 10 cm umfasst;
b) einen Dissolver (2), der dazu bestimmt ist, den Korb in seinem Innern und abnehmbar aufzunehmen und mit einer Laugenlösung zu füllen, die HNO₃ in einer Konzentration von zumindest 20 Gew.-% oder mehr umfasst; wobei der Dissolver (2) einen unteren Abschnitt (2b) mit einer Entleerungsvorrichtung (7) zum Entleeren umfasst;
c) Rührmittel (3), die dazu bestimmt sind, die Laugenlösung auf der Innenseite des Dissolvers (2) zu rühren;
d) ein Vibrationssieb (4), das dazu bestimmt ist, mit den Entleerungsmitteln (7) des Dissolvers (2) verbunden zu werden, um ihre Laugenlösung aufzunehmen; wobei das Vibrationssieb (4) mindestens ein erstes Sieb mit Löchern mit Abmessungen im Bereich von 10 bis 3 mm für die Rückgewinnung von ungeschweißten Komponenten unterschiedlicher Art und ein zweites Sieb mit Löchern mit Abmessungen im Bereich von 0,5 bis 0,01 mm für die Rückgewinnung von metallischem Gold umfasst.

2. Anordnung nach Anspruch 1, **dadurch gekennzeichnet, dass** die Rührmittel (3) eine mit dem Dissolver (2) verbundene Schwingungsplatte (3a) umfassen.

3. Anordnung nach Anspruch 1 oder 2, **dadurch gekennzeichnet, dass** der Dissolver (2) aus einem oberen Abschnitt (2a) mit der Form eines Parallelepipeds, der zur Aufnahme der zu bearbeitenden elektronischen Leiterplatten vorgesehen ist, und einem unteren Abschnitt (2b) mit der Form eines Kegelstumpfes besteht, welcher in der Mitte einen Hahn (7) aufweist, der als Entleerungsvorrichtung dient.

4. Anordnung nach einem der vorhergehenden Ansprüche, **dadurch gekennzeichnet, dass** das Vibrationssieb (4) eine obere Wand mit einer Öffnung (8) umfasst, die zur Aufnahme der Entleerungsvorrichtung (7) des Dissolvers (2) geeignet ist.

5. Anordnung nach einem der vorhergehenden Ansprüche, **dadurch gekennzeichnet, dass** der Korb (9) aus einer Vielzahl von Gehäusegestellen (11) mit rechteckiger Form besteht, die abnehmbar übereinander an einer einzigen Struktur (10) angeordnet sind.

6. Anordnung nach einem der vorhergehenden Ansprüche, **dadurch gekennzeichnet, dass** die Entleerungsvorrichtung (7) fernbedienbar ist.

7. Anordnung nach einem der vorhergehenden Ansprüche, **dadurch gekennzeichnet, dass** sie Bewegungsmittel (5) umfasst, die dazu bestimmt sind, den Dissolver (2) aus einer ersten Position, in der er mit den Rührmitteln (3) verbunden ist, in eine zweite Position, in der er mit dem Vibrationssieb (4) verbunden ist, und umgekehrt, zu bewegen.

8. Anordnung nach Anspruch 7, **dadurch gekennzeichnet, dass** sie eine Steuereinheit (6) umfasst, die zum Steuern der Bewegungsmittel (5) und/oder der Entleerungsvorrichtung (7) und/oder der Rührmittel (3) ausgelegt ist.

9. Anordnung nach einem der vorhergehenden Ansprüche, **dadurch gekennzeichnet, dass** der Korb (9) elektronische Leiterplatten aufnimmt, und der Dissolver (2) und das Vibrationssieb (4) aus einem Material ausgewählt aus Stahl, Aluminium oder Kunststoff und gegen starke Säuren beständig, hergestellt sind.

## Revendications

1. Ensemble (1) pour effectuer une récupération hydrométallurgique de matériaux à partir de cartes électroniques ; ledit ensemble étant **caractérisé en ce qu'**il comprend au moins :
a) un panier (9) destiné à contenir des cartes électroniques, qui comprend une structure maillée ayant des mailles présentant des dimensions variant entre 1 et 10 cm ;
b) un dissolveur (2), qui est conçu pour contenir, sur l'intérieur et de façon amovible, ledit panier (9) et pour être rempli d'une solution de lixiviation comprenant au moins du HNO₃ à une concentration supérieure ou égale à 20 % p/p ; ledit dissolveur (2) comprenant une partie inférieure (2b) ayant un dispositif de drainage (7) pour la vider ;
c) des moyens d'agitation (3), qui sont conçus pour agiter la solution de lixiviation à l'intérieur dudit dissolveur (2) ;
d) un tamis vibrant (4), qui est conçu pour être raccordé audit moyen de drainage (7) du dissolveur (2) de sorte à recevoir leur solution de lixiviation ; ledit tamis vibrant (4) comprenant au moins un premier tamis ayant des trous présentant des dimensions variant entre 10 et 3 mm pour la récupération de composants non soudés de nature différente, et un second tamis ayant des trous présentant des dimensions variant entre 0,5 et 0,01 mm pour la récupération d'or (Au) métallique.

2. Ensemble selon la revendication 1, **caractérisé en ce que** lesdits moyens d'agitation (3) comprennent un plateau oscillant (3a) raccordé audit dissolveur (2).

3. Ensemble selon la revendication 1 ou 2, **caractérisé en ce que** le dissolveur (2) consiste en une partie supérieure (2a) ayant la forme d'un parallélépipède, qui est conçue pour contenir les cartes électroniques qui doivent être traitées, et en une partie inférieure (2b) ayant la forme d'un cône tronqué, qui comporte, au centre, un robinet (7) faisant office de dispositif de drainage.

4. Ensemble selon l'une des revendications précédentes, **caractérisé en ce que** le tamis vibrant (4) comprend une paroi supérieure ayant une ouverture (8), qui est appropriée pour recevoir ledit dispositif de drainage (7) du dissolveur (2).

5. Ensemble selon l'une quelconque des revendications précédentes, **caractérisé en ce que** ledit panier (9) consiste en une pluralité de claies de réception (11) ayant une forme rectangulaire qui sont montées de manière amovible les unes sur les autres sur une seule structure (10) .

6. Ensemble selon l'une quelconque des revendications précédentes, **caractérisé en ce que** ledit dispositif de drainage (7) peut être commandé à distance.

7. Ensemble selon l'une des revendications précédentes, **caractérisé en ce qu'**il comprend des moyens de déplacement (5), qui sont conçus pour déplacer ledit dissolveur (2) depuis une première position, dans laquelle il est raccordé auxdits moyens d'agitation (3), jusqu'à une seconde position, dans laquelle il est raccordé audit tamis vibrant (4), et vice versa.

8. Ensemble selon la revendication 7, **caractérisé en ce qu'**il comprend une unité de commande (6), qui est conçue pour commander lesdits moyens de déplacement (5) et/ou ledit dispositif de drainage (7) et/ou lesdits moyens d'agitation (3).

9. Ensemble selon l'une quelconque des revendications précédentes, **caractérisé en ce que** ledit panier (9) contenant des cartes électroniques, ledit dissolveur (2) et ledit tamis vibrant (4) sont réalisés en un matériau choisi parmi l'acier, l'aluminium ou des matières plastiques résistant à des acides forts.
